# EUROPEAN PATENT APPLICATION

(11) **EP 4 706 469 A1**
(43) Date of publication of application: **11.03.2026**
(21) Application number: 24806355.4
(22) Date of filing: 29.04.2024
(51) Int. Cl.: A47J 36/32

(54) **CONTROL METHOD, CONTROL APPARATUS, READABLE STORAGE MEDIUM AND COOKING DEVICE**

(30) Priority: 15.05.2023 CN 202310540239
(71) Applicant: Guangdong Midea Kitchen Appliances Manufacturing Co., Ltd., Foshan, Guangdong 528311 (CN)
(72) Inventor: SUN, Yuwen, Foshan, Guangdong 528311 (CN); PENG, Shufang, Foshan, Guangdong 528311 (CN)
(74) Representative: RGTH
(86) International application number: PCT/CN2024/090564
(87) International publication number: WO 2024/234999

(57) **Abstract**

A control method, a control apparatus, a readable storage medium and a cooking device, which relate to the technical field of cooking devices. The control method is applied to a cooking device (100). The cooking device (100) comprises a cooking cavity (1022), and an image sensor (104) is provided in the cooking cavity (1022). The control method comprises: collecting image data in the cooking cavity (1022) by means of the image sensor (104); sending the image data to a target server; the target server performing image processing on the image data to obtain a processed target image; and the target server performing data interaction with a target terminal, so as to allow the target terminal to acquire and display the target image. The cooking device of an embodiment of the present invention can actively upload image data during a cooking process, helping a user to remotely grasp the cooking progress of food being cooked; the user thus does not need to frequently go to the cooking device to confirm the cooking status, which improves cooking efficiency.

## Description

### CROSS-REFERENCE TO RELATED APPLICATIONS

This application claims priority to Chinese Patent Application No. 202310540239.7 filed with the China National Intellectual Property Administration on May 15, 2023 and entitled "CONTROL METHOD, CONTROL APPARATUS, READABLE STORAGE MEDIUM AND COOKING DEVICE", the entire contents of which are incorporated herein by reference.

### FIELD

The present application relates to the technical field of cooking devices, and particularly relates to a control method, a control apparatus, a computer-readable storage medium and a cooking device.

### BACKGROUND

In the related art, cooking devices such as ovens require a long cooking time, and many factors can affect cooking results during cooking, leading to a high failure rate. Users need to frequently approach the oven, and open the door to check the cooking statuses of foods, to avoid circumstances of over-drying or burning, which results in low cooking efficiency.

### SUMMARY

The present application aims to at least solve one of the technical problems existing in the prior art or the related art.

To this end, a first aspect of the present application provides a control method.

A second aspect of the present application provides a control method.

A third aspect of the present application provides a control apparatus.

A fourth aspect of the present application provides a control apparatus.

A fifth aspect of the present application provides a control apparatus.

A sixth aspect of the present application provides a computer-readable storage medium.

A seventh aspect of the present application provides a cooking device.

An eighth aspect of the present application provides a cooking device.

A ninth aspect of the present application provides a cooking device.

In view of this, a first aspect of the present application provides a control method applied to a cooking device; the cooking device comprises a cooking cavity, and an image sensor is provided in the cooking cavity. The control method comprises: collecting image data in the cooking cavity by the image sensor; sending the image data to a target server; wherein, the target server performs image processing on the image data to obtain a processed target image, and data interaction is carried out between the target server and a target terminal, to allow the target terminal to acquire and display the target image.

In the technical solution, the cooking device specifically comprises an oven, a steam oven, etc. The cooking device is provided with an image sensor, the image sensor specifically comprises a camera assembly, and the image sensor is disposed in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the food being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiments of the present application can actively upload image data during the cooking process to help users remotely grasp the cooking progress of the foods being cooked. Users do not need to frequently approach the cooking device to confirm the cooking status, thus improves cooking efficiency.

In addition, the control method in the above technical solution provided by the present application may further have the following additional technical features:

In the above technical solution, the image data comprise video stream data, and the target image comprises the video stream data and a first video corresponding to the video stream data.

In this technical solution, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, thus realizing remote grasp of the cooking progress and improving cooking efficiency.

In any one of the above technical solutions, the image data comprise picture data, and the method further comprises: receiving an adjustment instruction, wherein the adjustment instruction is determined by the target server based on the image data; adjusting the cooking parameters of the cooking device based on the adjustment instruction.

In the technical solution, the cooking device can periodically capture photos in the cooking cavity at set time intervals to form picture data, and the cooking device uploads the picture data to the target server.

When the picture data are captured, since the picture data are captured in the form of single-frame images, the requirement for network bandwidth is relatively low, enabling the capture of images with higher resolution.

Upon receiving the picture data, the target server can perform image content recognition on the high-resolution high-definition pictures to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the picture data. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, thus realizing automatic control of the cooking process.

The cooking device in the embodiment of the present application can capture high-definition pictures in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

In any of the above technical solutions, the control method further comprises: controlling the image sensor to stop collecting image data when a stop collection input is received or a cooking completion signal of the cooking device is detected.

In the technical solution, users can perform the stop collection input through the application program on a terminal device such as a mobile phone. At this time, the terminal device directly sends a control signal for stopping image data collection to the target server or the cooking device. Upon receiving the control signal, the image sensor in the cooking cavity stops collecting and uploading image data.

It is understandable that users can further perform the stop collection input through the control panel or switch buttons provided on the cooking device.

After the cooking device completes the cooking program set by users, the main control system of the cooking device generates a cooking completion signal. Upon detecting the cooking completion signal, the image sensor further stops collecting image data.

Embodiments of the present application can freely control the process of collecting the image data by the cooking device, to improve the flexibility of the cooking device.

A second aspect of the present application provides a control method applied to a target server, and data interaction is carried out between the target server and a target terminal. The control method comprises: receiving image data sent by a cooking device; performing image processing on the image data to obtain a processed target image; and sending the target image to the target terminal when a request for viewing the target image from the target terminal is received, to allow the target terminal to display the target image.

In the technical solution, the target server may be a cloud server, and data interaction is carried out between the target server and the cooking device via wireless network connection. The target server may further be an intelligent gateway or a local server installed in the user's home, and data interaction is carried out between the target server and the cooking device through a local area wireless network.

The cooking device specifically comprises an oven, a steam oven, etc. The cooking device is provided with an image sensor, the image sensor specifically comprises a camera assembly, and the image sensor is disposed in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, thus improving cooking efficiency.

In the above technical solution, the image data comprise video stream data, and the target image comprises a first video corresponding to the video stream data.

In this technical solution, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, realizing remote grasp of the cooking progress and improving cooking efficiency.

In any one of the above technical solutions, after performing image processing on the image data to obtain the processed target image, the control method further comprises: generating a corresponding adjustment instruction according to the target image; sending the adjustment instruction to the cooking device, to allow the cooking device to adjust the cooking parameters based on the adjustment instruction.

In the technical solution, the image data may be video stream data or picture data. Wherein, when the video stream data are picture data, the cooking device can periodically capture photos in the cooking cavity at set time intervals to form picture data, and the cooking device uploads the picture data to the target server.

After receiving the image data, the target server performs corresponding processing on the image data and obtains the processed target image. After obtaining the target image, the target server can perform image content recognition on the target image to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the target image. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, realizing automatic control of the cooking process.

The cooking device in the embodiment of the present application can capture the image data in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

In any one of the above technical solutions, the image data comprises multiple picture data, and the target image comprises a second video; performing image processing on the image data to obtain the processed target image comprises: determining a first picture as a target frame when the first picture among the multiple picture data does not comprise a preset target; performing algorithmic processing on a second picture when the second picture among the multiple picture data comprise the preset target, and determining the processed second picture as a target frame, wherein the processed second picture does not comprise the preset target; sorting multiple target frames according to the receiving order of multiple picture data corresponding to the multiple target frames to obtain a frame sequence; generating a second video based on the frame sequence.

In the technical solution, the image data uploaded by the cooking device comprises multiple picture data, wherein, the multiple picture data may be photos of the cooking cavity captured periodically by the cooking device at set time intervals.

When the target server receives multiple picture data, it performs algorithmic processing on the received picture data to optimize the captured photos.

Exemplarily, the target server first performs target recognition on the picture data and determines whether the picture data contain a preset target.

Wherein, the preset target may be an image distortion area caused by water droplets, bright spots caused by external strong light irradiation, or reflective reflections formed by objects outside the cooking device in the cooking cavity under light irradiation, etc. These situations will affect the final image effect.

Therefore, when it is determined that the received picture data contain the above preset target, the picture data containing the preset target can be processed through a preset processing method. Exemplarily, the picture data can be processed by an optical flow method.

For example, if the picture data contain an image distortion area caused by water droplets, users can search other adjacent picture frames to find an image frame that has no distortion area and whose capturing time is closest to the current picture data. Then, an image part that does not contain water droplets is extracted from the same image area in this image frame to replace the distortion area in the current image data, to eliminate the impact of image distortion caused by water droplets.

For example, if the picture data contain reflective reflections of external objects, a reflection area is recognized through optical flow changes, and segmentation processing is performed on the reflection area to ensure that the finally obtained target image is not interfered by the reflections.

Whenever a picture datum is received, if the current picture data, i.e., the first picture, does not contain the above preset target, the picture frame of the picture data is directly set as a target frame.

If the current picture data, i.e., the second picture, contains the preset target, the preset target is removed from the second picture through an algorithm, and then the processed second picture is set as a target frame.

After multiple target frames are obtained, the target frames are sorted according to the time order in which the original image data corresponding to the target frames are received to obtain a sorted frame sequence, and the frame sequence is then synthesized to generate the final second video.

Each video frame in the second video is free from external interference or is not processed by an algorithm, so the video effect of the second video is better. Users can download the second video through the application program on their mobile phones and save it as a cooking record. They can further edit the second video using preset templates, such as color grading and adding subtitles, and share the edited video with one click.

In the embodiments of the present application, algorithmic optimization processing is performed on the image data uploaded by the cooking device, and a video is generated based on the optimally processed image frames for storage or sharing, which enhances the cooking pleasure and enriches the usage effect of the cooking device.

In any of the above technical solutions, performing image processing on the image data to obtain the processed target image comprises: acquiring preset color gamut calibration information; performing color gamut calibration on the image data through the color gamut calibration information to obtain a calibrated target image.

In the technical solution, when the target server receives the image data, it acquires the corresponding color gamut calibration information, wherein the color gamut calibration information may be calibration matrices corresponding to different color gamuts set based on prior knowledge.

Color gamut calibration processing is performed on the received image data using the color gamut calibration information, then the color reproduction effect of the finally obtained target image is improved, the imaging quality of the target image is optimized, and the target image can more accurately restore the actual appearance of the cooked foods, which facilitates users to view or share it.

In the embodiments of the present application, calibrating the image data can improve the color reproduction accuracy of the generated target image and optimize the imaging quality of the target image.

In any one of the above technical solutions, the cooking device comprises a door body. After receiving the image data sent by the cooking device, the control method further comprises: performing object recognition on the image data; deleting the target image frame if the target image frame in the image data is recognized as comprising the door body and the door body is in an open status.

In the embodiments of the present application, since the image sensor of the cooking device collects image data of the cooking cavity in real time during the operation of the cooking device, when users open the door body of the cooking device, the users may be captured in the image data collected by the image sensor.

When the target server receives the image data, if it recognizes that the door body of the cooking device is open, it deletes all image frames in which the door body is recognized to be open. This avoids uploading the image frames capturing the users to the server and protects the users' privacy.

The third aspect of the present application provides a control apparatus applied to a cooking device. The cooking device comprises a cooking cavity, and an image sensor is arranged in the cooking cavity. The control apparatus comprises: a collecting module configured to collect image data of the cooking cavity through the image sensor; a first sending module configured to send the image data to a target server, wherein, the target server performs image processing on the image data to obtain a processed target image, and data interaction is carried out between the target server and a target terminal, to allow the target terminal to acquire and display the target image.

In the embodiments of the present application, the cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, which improves cooking efficiency.

Based on any one of the above embodiments, the image data comprise video stream data, and the target image comprise the video stream data and a first video corresponding to the video stream data.

In the embodiments of the present application, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

The fourth aspect of the present application provides a control apparatus applied to a target server. Data interaction is carried out between the target server and a target terminal. The control apparatus comprises: a receiving module configured to receive image data sent by a cooking device; a processing module configured to perform image processing on the image data to obtain a processed target image; a second sending module configured to send the target image to the target terminal upon receiving a request for viewing the target image from the target terminal, to allow the target terminal to display the target image.

In the technical solution, the target server may be a cloud server, and data interaction is carried out between the target server and the cooking device via wireless network connection. The target server may further be an intelligent gateway or a local server installed in the user's home, and data interaction is carried out between the target server and the cooking device through a local area wireless network.

The cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, which improves cooking efficiency.

The fifth aspect of the present application provides a control apparatus, comprising: a memory configured to store programs or instructions; a processor configured to implement the steps of the control method according to any one of the above technical solutions when executing the programs or instructions. Therefore, the control apparatus further comprises all the beneficial effects of the control method according to any one of the above technical solutions, which are not repeated here to avoid redundancy.

The sixth aspect of the present application provides a computer-readable storage medium on which programs or instructions are stored. When the programs or instructions are executed by a processor, the steps of the control method according to any one of the above technical solutions are implemented. Therefore, the computer-readable storage medium further comprises all the beneficial effects of the control method according to any one of the above technical solutions, which are not repeated here to avoid redundancy.

The seventh aspect of the present application provides a cooking device, comprising the control apparatus provided in any one of the above technical solutions. Therefore, the cooking device further comprises all the beneficial effects of the control apparatus provided in any one of the above technical solutions, which are not repeated here to avoid redundancy.

The eighth aspect of the present application provides a cooking device, comprising the computer-readable storage medium provided in any one of the above technical solutions. Therefore, the cooking device further comprises all the beneficial effects of the computer-readable storage medium provided in any one of the above technical solutions, which are not repeated here to avoid redundancy.

The ninth aspect of the present application provides a cooking device, comprising: the control apparatus provided in any one of the above technical solutions; and the computer-readable storage medium provided in any one of the above technical solutions. Therefore, the cooking device further comprises all the beneficial effects of the control apparatus and the computer-readable storage medium provided in any one of the above technical solutions, which are not repeated here to avoid redundancy.

In the above technical solutions, the cooking device further comprises: a main body that comprises a cooking cavity; an image sensor disposed inside the cooking cavity for collecting image data of the cooking cavity.

In the technical solution, the cooking device is specifically an oven or a steam oven. A cooking cavity is arranged in the main body of the oven, and the image sensor is disposed inside the cooking cavity. When the cooking device is in an operating status, the image sensor can capture real-time image data of the interior of the cooking cavity, specifically the image data of the foods being cooked.

### BRIEF DESCRIPTION OF THE DRAWINGS

The above and/or additional aspects and advantages of the present application will become apparent and easily understandable from the description of the embodiments in combination with the following accompanying drawings, wherein:
FIG. 1 shows a schematic view of the structure of a cooking device according to an embodiment of the present application;
FIG. 2 shows a flowchart of a control method according to an embodiment of the present application;
FIG. 3 shows a flowchart of a control method according to an embodiment of the present application;
FIG. 4 shows a schematic view of the interaction between a cooking device and a target server according to an embodiment of the present application;
FIG. 5 shows a block diagram of the structure of a control apparatus according to an embodiment of the present application;
FIG. 6 shows a block diagram of the structure of a control apparatus according to an embodiment of the present application; and
FIG. 7 shows a block diagram of the structure of a control apparatus according to an embodiment of the present application.

Reference signs:
100 cooking device, 102 main body, 1022 cooking cavity, 104 image sensor.

### DETAILED DESCRIPTION

In order to enable a clearer understanding of the above objectives, features, and advantages of the present application, the application is described in further details below with reference to the accompanying drawings and specific implementations. It should be noted that, in the absence of conflicts, the embodiments of the present application and the features in the embodiments may be combined with each other.

Numerous specific details are set forth in the following description to facilitate a thorough understanding of the present application. However, the present application may further be implemented in other ways different from those described herein. Therefore, the protection scope of the present application is not limited by the specific embodiments disclosed below.

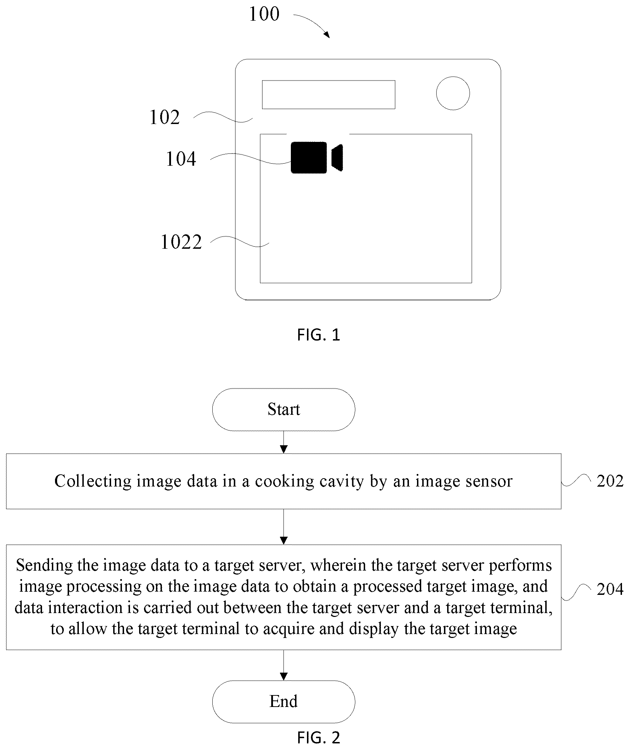

A control method, a control apparatus, a computer-readable storage medium, and a cooking device according to some embodiments of the present application are described below with reference to FIG. 1 to FIG. 7.

In some embodiments of the present application, a control method is provided, which is applied to a cooking device. FIG. 1 shows a schematic view of the structure of the cooking device according to an embodiment of the present application. As shown in FIG. 1, the cooking device 100 comprises a main body 102, the main body 102 comprises a cooking cavity 1022, and an image sensor 104 is disposed in the cooking cavity 1022.

FIG. 2 shows a flowchart of a control method according to an embodiment of the present application. As shown in FIG. 2, the control method comprises:
Step 202: collecting the image data of the cooking cavity through the image sensor; and
Step 204: sending the image data to a target server, wherein the target server performs image processing on the image data to obtain a processed target image, and data interaction is carried out between the target server and a target terminal, to allow the target terminal to acquire and display the target image.

In the embodiments of the present application, the cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the food being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiments of the present application can actively upload image data during the cooking process to help users remotely grasp the cooking progress of the foods being cooked. Users do not need to frequently approach the cooking device to confirm the cooking status, which improves cooking efficiency.

Based on any one of the above embodiments, the image data comprise video stream data, and the target image comprise the video stream data and a first video corresponding to the video stream data.

In the embodiments of the present application, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, realizing remote grasp of the cooking progress and improving cooking efficiency.

Based on any one of the above embodiments, the image data comprise picture data, and the control method further comprises: receiving an adjustment instruction, wherein the adjustment instruction is determined by the target server based on the image data; adjusting the cooking parameters of the cooking device according to the adjustment instruction.

In the embodiments of the present application, the cooking device can periodically capture photos in the cooking cavity at set time intervals to form picture data, and the cooking device uploads the picture data to the target server.

When the picture data are captured, since the picture data are captured in the form of single-frame images, the requirement for network bandwidth is relatively low, enabling the capture of images with higher resolution.

Upon receiving the picture data, the target server can perform image content recognition on the high-resolution high-definition pictures to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the picture data. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, realizing automatic control of the cooking process.

The cooking device in the embodiment of the present application can capture high-definition pictures in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

Based on any one of the above embodiments, the control method further comprises: controlling the image sensor to stop collecting image data when a stop collection input is received or a cooking completion signal of the cooking device is detected.

In the embodiments of the present application, users can perform the stop collection input through the application program on a terminal device such as a mobile phone. At this time, the terminal device directly sends a control signal for stopping image data collection to the target server or the cooking device. Upon receiving the control signal, the image sensor in the cooking cavity stops collecting and uploading image data.

It is understandable that users can further perform the stop collection input through the control panel or switch buttons provided on the cooking device.

After the cooking device completes the cooking program set by users, the main control system of the cooking device generates a cooking completion signal. Upon detecting the cooking completion signal, the image sensor further stops collecting image data.

Embodiments of the present application can freely control the process of collecting the image data by the cooking device, to improve the flexibility of the cooking device.

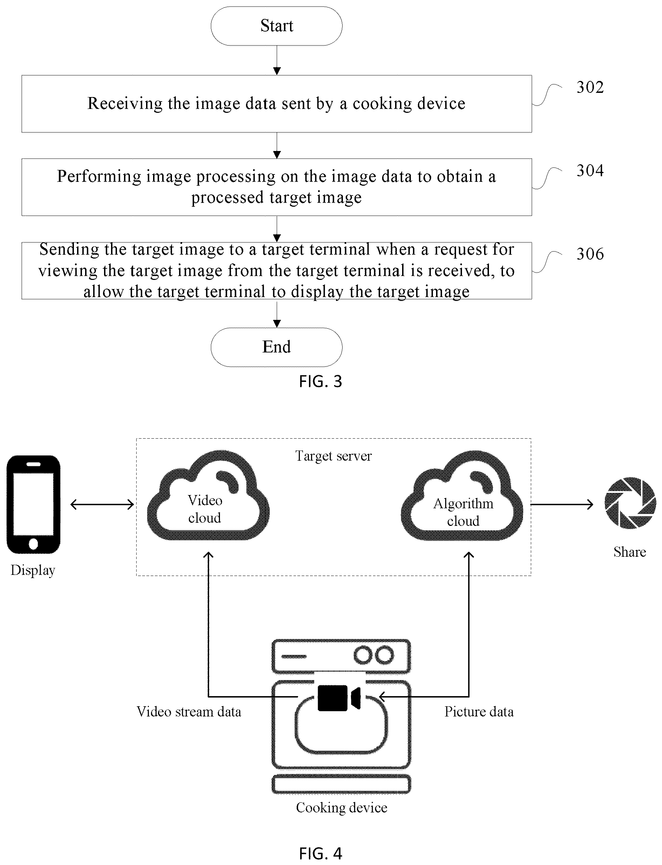

Some embodiments of the present application provide a control method applied to a target server, and data interaction is carried out between the target server and a target terminal. FIG. 3 shows a flowchart of a control method according to an embodiment of the present application. As shown in FIG. 3, the control method comprises:
Step 302: receiving image data sent by a cooking device;
Step 304: performing image processing on the image data to obtain a processed target image; and
Step 306: sending the target image to the target terminal when a request for viewing the target image from the target terminal is received, to allow the target terminal to display the target image.

In the embodiments of the present application, the target server may be a cloud server, and data interaction is carried out between the target server and the cooking device via wireless network connection. The target server may further be an intelligent gateway or a local server installed in the user's home, and data interaction is carried out between the target server and the cooking device through a local area wireless network.

The cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, which improves cooking efficiency.

Based on any one of the above embodiments, the image data comprise video stream data, and the target image comprise a first video corresponding to the video stream data.

In the embodiments of the present application, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, realizing remote grasp of the cooking progress and improving cooking efficiency.

Based on any one of the above embodiments, after performing image processing on the image data to obtain the processed target image, the control method further comprises: generating a corresponding adjustment instruction according to the target image; sending the adjustment instruction to the cooking device, to allow the cooking device to adjust the cooking parameters based on the adjustment instruction.

In the embodiments of the present application, the image data may be video stream data or picture data. Wherein, when the video stream data are picture data, the cooking device can periodically capture photos in the cooking cavity at set time intervals to form picture data, and the cooking device uploads the picture data to the target server.

After receiving the image data, the target server performs corresponding processing on the image data and obtains the processed target image. After obtaining the target image, the target server can perform image content recognition on the target image to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the target image. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, realizing automatic control of the cooking process.

The cooking device in the embodiment of the present application can capture the image data in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

Based on any one of the above embodiments, the image data comprise multiple picture data, and the target image comprises a second video; performing image processing on the image data to obtain the processed target image comprises: determining a first picture as a target frame when the first picture among the multiple picture data does not comprise a preset target; performing algorithmic processing on a second picture when the second picture among the multiple picture data comprise the preset target, and determining the processed second picture as a target frame, wherein the processed second picture does not comprise the preset target; sorting multiple target frames according to the receiving order of multiple picture data corresponding to the multiple target frames to obtain a frame sequence; generating a second video based on the frame sequence.

In the embodiments of the present application, the image data uploaded by the cooking device comprise multiple picture data, wherein, the multiple picture data may be photos of the cooking cavity captured periodically by the cooking device at set time intervals.

When the target server receives multiple picture data, it performs algorithmic processing on the received picture data to optimize the captured photos.

Exemplarily, the target server first performs target recognition on the picture data and determines whether the picture data contain a preset target.

Wherein, the preset target may be an image distortion area caused by water droplets, bright spots caused by external strong light irradiation, or reflective reflections formed by objects outside the cooking device in the cooking cavity under light irradiation, etc. These situations will affect the final image effect.

Therefore, when it is determined that the received picture data contain the above preset target, the picture data containing the preset target can be processed through a preset processing method. Exemplarily, the picture data can be processed by an optical flow method.

For example, if the picture data contain an image distortion area caused by water droplets, users can search other adjacent picture frames to find an image frame that has no distortion area and whose capturing time is closest to the current picture data. Then, an image part that does not contain water droplets is extracted from the same image area in this image frame to replace the distortion area in the current image data, to eliminate the impact of image distortion caused by water droplets.

For example, if the picture data contain reflective reflections of external objects, a reflection area is recognized through optical flow changes, and segmentation processing is performed on the reflection area to ensure that the finally obtained target image is not interfered by the reflections.

Whenever a picture datum is received, if the current picture data, i.e., the first picture, does not contain the above preset target, the picture frame of the picture data is directly set as a target frame.

If the current picture data, i.e., the second picture, contains the preset target, the preset target is removed from the second picture through an algorithm, and then the processed second picture is set as a target frame.

After multiple target frames are obtained, the target frames are sorted according to the time order in which the original image data corresponding to the target frames are received to obtain a sorted frame sequence, and the frame sequence is then synthesized to generate the final second video.

Each video frame in the second video is free from external interference or is not processed by an algorithm, so the video effect of the second video is better. Users can download the second video through the application program on their mobile phones and save it as a cooking record. They can further edit the second video using preset templates, such as color grading and adding subtitles, and share the edited video with one click.

In the embodiments of the present application, algorithmic optimization processing is performed on the image data uploaded by the cooking device, and a video is generated based on the optimally processed image frames for storage or sharing, which enhances the cooking pleasure and enriches the usage effect of the cooking device.

Based on any one of the above embodiments, performing image processing on the image data to obtain the processed target image comprises: acquiring preset color gamut calibration information; performing color gamut calibration on the image data through the color gamut calibration information to obtain a calibrated target image.

In the embodiments of the present application, when the target server receives the image data, it acquires the corresponding color gamut calibration information, wherein the color gamut calibration information may be calibration matrices corresponding to different color gamuts set based on prior knowledge.

Color gamut calibration processing is performed on the received image data using the color gamut calibration information, then the color reproduction effect of the finally obtained target image is improved, the imaging quality of the target image is optimized, and the target image can more accurately restore the actual appearance of the cooked foods, which facilitates users to view or share it.

In the embodiments of the present application, calibrating the image data can improve the color reproduction accuracy of the generated target image and optimize the imaging quality of the target image.

Based on any one of the above embodiments, the cooking device comprises a door body. After receiving the image data sent by the cooking device, the control method further comprises: performing object recognition on the image data; deleting the target image frame if it is recognized that the target image frame in the image data comprises the door body and the door body is in an open status.

In the embodiments of the present application, since the image sensor of the cooking device collects image data of the cooking cavity in real time during the operation of the cooking device, when users open the door body of the cooking device, the users may be captured in the image data collected by the image sensor.

When the target server receives the image data, if it recognizes that the door body of the cooking device is open, it deletes all image frames in which the door body is recognized to be open. This avoids uploading the image frames capturing the users to the server and protects the users' privacy.

In some embodiments of the present application, FIG. 4 shows a schematic view of the interaction between a cooking device and a target server according to an embodiment of the present application. As shown in FIG. 4, the cooking device can upload video stream data and picture data to the target server, and a video cloud service of the target server can push the video stream data to the users' mobile phone for the users to view in real time. The algorithm cloud service of the target server can perform algorithmic processing on the picture data to obtain the processed target image, and conduct sharing processing on the target image.

Exemplarily, it is taken as an example that the cooking device is an oven and the image sensor is a camera. The camera completes real-time collection of videos and images of the cooked foods, wherein the video stream is transmitted to the video cloud, the video cloud establishes a connection with the users' mobile phone to realize remote video viewing. The images are transmitted to the algorithm cloud, the algorithm cloud performs optimization processing on the pictures, merges all pictures of the cooking process, and generates a short cooking video for sharing.

Wherein, the algorithm cloud completes real-time monitoring of the cooking process, judges the doneness of the cooked foods, feeds back and adjusts the cooking parameters, and improves the cooking success rate.

The optimization processing on the images by the algorithm cloud comprises oven door opening detection, image water droplet interference filtering, reflection filtering of objects outside the oven, imaging effect beautification, etc. Each picture is stored after the aforementioned processing for generating short cooking videos.

Wherein, for oven door opening detection, when users open the oven door, the camera still captures images. To protect user privacy and avoid interference during the cooking process, a comparison algorithm is configured to determine whether the current picture is a normal cooking picture inside the oven. If not (for example, when the oven door is open), the picture is directly deleted.

For the image water droplet interference filtering algorithm, during the cooking process of the oven, water in the foods will evaporate and form water droplets on the inner wall of the oven cavity. Water droplets in front of the camera will seriously affect the imaging effect. An optical flow change detection algorithm between pictures is configured to detect the positions of water droplets, and the image at the position of the water droplets are replaced with images that do not contain water droplets.

For the reflection filtering algorithm for objects outside the oven, when the external light is strong, reflections of external objects may appear inside the oven, affecting the imaging effect. The area with reflections can be recognized through optical flow changes, and the area is segmented to ensure that there is no reflection interference in shared images.

For imaging effect beautification, calibration matrices of different color gamuts can be set based on prior knowledge to optimize imaging quality and improve the presentation effect of foods.

The oven collects pictures at a high-definition resolution and uploads them to the server at fixed time intervals.

The video cloud stores the uploaded video stream for the users to view later. The collection of the video stream is automatically initiated when cooking starts and automatically terminated when cooking is completed, or can be actively triggered and stopped by users.

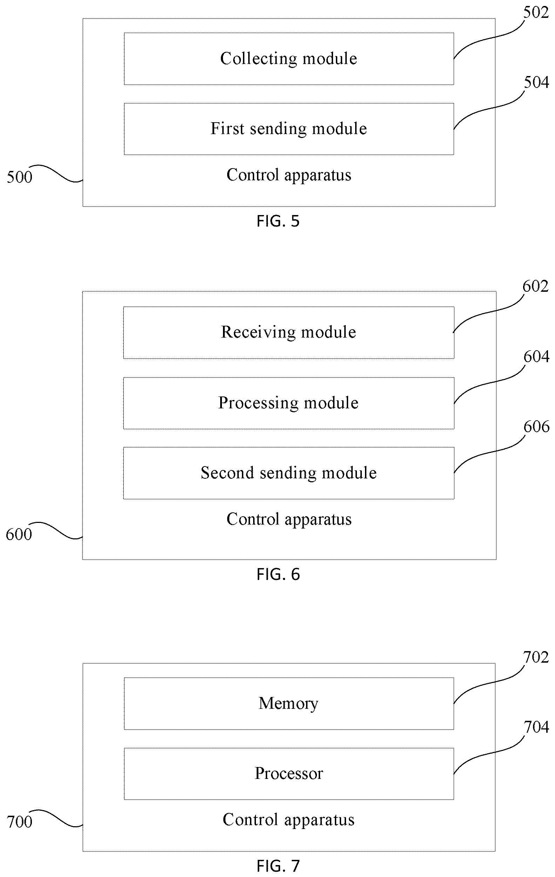

In some embodiments of the present application, a control apparatus is provided, which is applied to a cooking device. The cooking device comprises a cooking cavity, and an image sensor is disposed in the cooking cavity. FIG. 5 shows a block diagram of the structure of the control apparatus according to an embodiment of the present application. As shown in FIG. 5, the control apparatus 500 comprises:
a collecting module 502 configured to collect image data of the cooking cavity through the image sensor; and
a first sending module 504 configured to send the image data to a target server, wherein, the target server performs image processing on the image data to obtain a processed target image, and data interaction is carried out between the target server and a target terminal, to allow the target terminal to acquire and display the target image.

In the embodiments of the present application, the cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, which improves cooking efficiency.

Based on any one of the above embodiments, the image data comprise video stream data, and the target image comprise the video stream data and a first video corresponding to the video stream data.

In the embodiments of the present application, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, realizing remote grasp of the cooking progress and improving cooking efficiency.

Based on any one of the above embodiments, the image data comprises picture data, and the control apparatus further comprises: an instruction receiving module configured to receive an adjustment instruction, wherein the adjustment instruction is determined by the target server based on the image data; an adjusting module configured to adjust the cooking parameters of the cooking device according to the adjustment instruction.

In the embodiments of the present application, the cooking device can periodically capture photos in the cooking cavity at set time intervals to form picture data, and the cooking device uploads the picture data to the target server.

When the picture data are captured, since the picture data are captured in the form of single-frame images, the requirement for network bandwidth is relatively low, enabling the capture of images with higher resolution.

Upon receiving the picture data, the target server can perform image content recognition on the high-resolution high-definition pictures to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the picture data. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, realizing automatic control of the cooking process.

The cooking device in the embodiment of the present application can capture high-definition pictures in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

Based on any one of the above embodiments, the control apparatus further comprises: a control module configured to control the image sensor to stop collecting image data when a stop collection input is received or a cooking completion signal of the cooking device is detected.

In the embodiments of the present application, users can perform the stop collection input through the application program on a terminal device such as a mobile phone. At this time, the terminal device directly sends a control signal for stopping image data collection to the target server or the cooking device. Upon receiving the control signal, the image sensor in the cooking cavity stops collecting and uploading image data.

It is understandable that users can further perform the stop collection input through the control panel or switch buttons provided on the cooking device.

After the cooking device completes the cooking program set by users, the main control system of the cooking device generates a cooking completion signal. Upon detecting the cooking completion signal, the image sensor further stops collecting image data.

Embodiments of the present application can freely control the process of collecting the image data by the cooking device, to improve the flexibility of the cooking device.

Some embodiments of the present application provide a control apparatus applied to a target server, and data interaction is carried out between the target server and a target terminal. FIG. 6 shows a block diagram of the structure of a control apparatus according to an embodiment of the present application. As shown in FIG. 6, the control apparatus 600 comprises:
a receiving module 602 configured to receive image data sent by a cooking device;
a processing module 604 configured to perform image processing on the image data to obtain a processed target image; and
a second sending module 606 configured to send the target image to the target terminal upon receiving a request for viewing the target image from the target terminal, to allow the target terminal to display the target image.

In the embodiments of the present application, the target server may be a cloud server, and data interaction is carried out between the target server and the cooking device via wireless network connection. The target server may further be an intelligent gateway or a local server installed in the user's home, and data interaction is carried out between the target server and the cooking device through a local area wireless network.

The cooking device specifically comprises an oven, a steam oven, etc. The cooking device is provided with an image sensor, the image sensor specifically comprises a camera assembly, and the image sensor is arranged in the cooking cavity and configured to capture the image data of the foods being cooked during the operation of the cooking device.

Exemplarily, when the cooking device is in the cooking process, the image sensor collects real-time image data of the foods being cooked in the cooking cavity, and the image data may be video stream data or picture frame data.

After the image data are captured, the cooking device synchronously sends the image data to the target server via wireless network connection.

Upon receiving the image data, the target server performs corresponding image processing on the image data. For example, if the image data are video stream data, the target server conducts corresponding compression processing on the video stream data; if the image data are picture frame data, the target server performs desensitization, beautification, filtering and other processing on the picture frame data to obtain a processed target image.

Users can log into an account bound to the cooking device via terminals such as mobile phones, or scan an identification code on the cooking device to establish an association relation with the cooking device. They can then access the target server through the application program on the terminal where they logged into the account or established the association relation, to obtain the target images of the foods being cooked uploaded by the cooking device during the cooking process and thus grasp the cooking progress of the cooking device in real time.

It is understandable that when users view the cooking progress of the cooking device via terminals such as mobile phones, they can further send control instructions for adjusting cooking parameters to the cooking device in real time through the application program, to remotely control the cooking device.

The cooking device in the embodiment of the present application can actively upload image data during the cooking process to help users remotely grasp the cooking progress of the foods being cooked. Users do not need to frequently approach the cooking device to confirm the cooking status, which improves cooking efficiency.

Based on any one of the above embodiments, the image data comprise video stream data, and the target image comprise a first video corresponding to the video stream data.

In the embodiments of the present application, the image data collected by the image sensor in the cooking cavity specifically comprise video stream data. The video stream data specifically refer to video data transmitted continuously and persistently through the network. When the target server receives the video stream data, it continuously solidifies and saves the video stream data to form the first video.

When users access the target server via terminals such as mobile phones, they can directly choose to play and view the video stream data. The video stream data reflect real-time images in the cooking cavity, and users can judge the real-time cooking progress of the foods being cooked through the video stream data.

Users can further choose to play the first video, which comprise all video images from the time node when the cooking device starts cooking to the current time node. Users can watch the images of the foods being cooked at various time nodes after the start of cooking through methods such as speed-controlled playback and dragging the progress bar, to help users judge the cooking effect.

The cooking device in the embodiment of the present application can directly send the video stream to the target server. Users can view the cooking situation in the cooking cavity at various time points in real time by accessing the target server, and can further watch the real-time images in the current cooking cavity at any time, realizing remote grasp of the cooking progress and improving cooking efficiency.

Based on any one of the above embodiments, the control apparatus further comprises: a generating module configured to generate a corresponding adjustment instruction according to the target image; a second sending module further configured to send the adjustment instruction to the cooking device, to allow the cooking device to adjust cooking parameters according to the adjustment instruction.

In the embodiments of the present application, the image data may be video stream data or picture data. Wherein, when the video stream data are picture data, the cooking device can periodically capture photos in the cooking cavity at set time intervals to form picture data, and the cooking device uploads the picture data to the target server.

After receiving the image data, the target server performs corresponding processing on the image data and obtains the processed target image. After obtaining the target image, the target server can perform image content recognition on the target image to intelligently determine the real-time cooking status in the cooking cavity. When a change in the food status is recognized, for example, smoke appears in the cooking cavity or the foods being cooked turn black (are burnt), it automatically generates an adjustment instruction for reducing the power of the cooking device. For another example, after the cooking duration reaches a preset duration, the target server judges the doneness of the foods being cooked based on the target image. If the doneness of the foods being cooked does not meet an expected status, it automatically generates an adjustment instruction for increasing the power of the cooking device.

After generating the adjustment instruction, the target server sends the adjustment instruction to the cooking device. Upon receiving the adjustment instruction, the cooking device adjusts its own cooking parameters (such as heating power) according to the adjustment instruction, realizing automatic control of the cooking process.

The cooking device in the embodiment of the present application can capture the image data in the cooking cavity and upload them to the server. The target server judges the cooking status of the foods being cooked through an image recognition technology. When the cooking status of the foods changes, the target server generates corresponding adjustment instructions to ensure the cooking effect, to improve the cooking success rate of cooking devices such as ovens.

Based on any one of the above embodiments, the image data comprises multiple picture data, and the target image comprises a second video; the control apparatus further comprises: a determining module configured to determine a first picture among the multiple picture data as a target frame if the first picture does not contain a preset target; a processing module further configured to perform algorithmic processing on a second picture among the multiple picture data if the second picture contains the preset target, and determine the processed second picture as a target frame, wherein the processed second picture does not contain the preset target; a sorting module configured to sort multiple target frames according to the receiving order of the multiple picture data corresponding to the multiple target frames to obtain a frame sequence; a generating module configured to generate a second video according to the frame sequence.

In the embodiments of the present application, the image data uploaded by the cooking device comprise multiple picture data, wherein, the multiple picture data may be photos of the cooking cavity captured periodically by the cooking device at set time intervals.

When the target server receives multiple picture data, it performs algorithmic processing on the received picture data to optimize the captured photos.

Exemplarily, the target server first performs target recognition on the picture data and determines whether the picture data contain a preset target.

Wherein, the preset target may be an image distortion area caused by water droplets, bright spots caused by external strong light irradiation, or reflective reflections formed by objects outside the cooking device in the cooking cavity under light irradiation, etc. These situations will affect the final image effect.

Therefore, when it is determined that the received picture data contain the above preset target, the picture data containing the preset target can be processed through a preset processing method. Exemplarily, the picture data can be processed by an optical flow method.

For example, if the picture data contain an image distortion area caused by water droplets, users can search other adjacent picture frames to find an image frame that has no distortion area and whose capturing time is closest to the current picture data. Then, an image part that does not contain water droplets is extracted from the same image area in this image frame to replace the distortion area in the current image data, to eliminate the impact of image distortion caused by water droplets.

For example, if the picture data contain reflective reflections of external objects, a reflection area is recognized through optical flow changes, and segmentation processing is performed on the reflection area to ensure that the finally obtained target image is not interfered by the reflections.

Whenever a picture datum is received, if the current picture data, i.e., the first picture, does not contain the above preset target, the picture frame of the picture data is directly set as a target frame.

If the current picture data, i.e., the second picture, contains the preset target, the preset target is removed from the second picture through an algorithm, and then the processed second picture is set as a target frame.

After multiple target frames are obtained, the target frames are sorted according to the time order in which the original image data corresponding to the target frames are received to obtain a sorted frame sequence, and the frame sequence is then synthesized to generate the final second video.

Each video frame in the second video is free from external interference or is not processed by an algorithm, so the video effect of the second video is better. Users can download the second video through the application program on their mobile phones and save it as a cooking record. They can further edit the second video using preset templates, such as color grading and adding subtitles, and share the edited video with one click.

In the embodiments of the present application, algorithmic optimization processing is performed on the image data uploaded by the cooking device, and a video is generated based on the optimally processed image frames for storage or sharing, which enhances the cooking pleasure and enriches the usage effect of the cooking device.

Based on any one of the above embodiments, the control apparatus further comprises: an acquiring module further configured to acquire preset color gamut calibration information; a processing module further configured to perform color gamut calibration on the image data through the color gamut calibration information to obtain a calibrated target image.

In the embodiments of the present application, when the target server receives the image data, it acquires the corresponding color gamut calibration information, wherein the color gamut calibration information may be calibration matrices corresponding to different color gamuts set based on prior knowledge.

Color gamut calibration processing is performed on the received image data using the color gamut calibration information, then the color reproduction effect of the finally obtained target image is improved, the imaging quality of the target image is optimized, and the target image can more accurately restore the actual appearance of the cooked foods, which facilitates users to view or share it.

In the embodiments of the present application, calibrating the image data can improve the color reproduction accuracy of the generated target image and optimize the imaging quality of the target image.

Based on any one of the above embodiments, the cooking device comprises a door body. After receiving the image data sent by the cooking device, the control apparatus further comprises: a recognizing module configured to perform object recognition on the image data; a deleting module configured to delete the target image frame if it is recognized that the target image frame in the image data comprises the door body and the door body is in an open status.

In the embodiments of the present application, since the image sensor of the cooking device collects image data of the cooking cavity in real time during the operation of the cooking device, when users open the door body of the cooking device, the users may be captured in the image data collected by the image sensor.

When the target server receives the image data, if it recognizes that the door body of the cooking device is open, it deletes all image frames in which the door body is recognized to be open. This avoids uploading the image frames capturing the users to the server and protects the users' privacy.

Some embodiments of the present application provide a control apparatus, and FIG. 7 shows a block diagram of the structure of a control apparatus according to an embodiment of the present application. As shown in FIG. 7, the control apparatus 700 comprises: a memory 702 configured to store programs or instructions; a processor 704 configured to implement the steps of the control method according to any one of the above embodiments when executing the programs or instructions. Therefore, the control apparatus further comprises all the beneficial effects of the control method according to any one of the above embodiments, which are not repeated here to avoid redundancy.

Some embodiments of the present application provide a computer-readable storage medium on which programs or instructions are stored. When the programs or instructions are executed by a processor, the steps of the control method according to any one of the above embodiments are implemented. Therefore, the computer-readable storage medium further comprises all the beneficial effects of the control method according to any one of the above embodiments, which are not repeated here to avoid redundancy.

Some embodiments of the present application provide another cooking device, comprising the control apparatus provided in any one of the above embodiments. Therefore, the cooking device further comprises all the beneficial effects of the control apparatus provided in any one of the above embodiments, which are not repeated here to avoid redundancy. The eighth aspect of the present application provides a cooking device, comprising the computer-readable storage medium provided in any one of the above embodiments. Therefore, the cooking device further comprises all the beneficial effects of the computer-readable storage medium provided in any one of the above embodiments, which are not repeated here to avoid redundancy.

The ninth aspect of the present application provides a cooking device, comprising: the control apparatus provided in any one of the above embodiments; and the computer-readable storage medium provided in any one of the above embodiments. Therefore, the cooking device further comprises all the beneficial effects of the control apparatus and the computer-readable storage medium provided in any one of the above embodiments, which are not repeated here to avoid redundancy.

Based on any one of the above embodiments, as shown in FIG. 1, the cooking device 100 further comprises: a main body 102 that comprises a cooking cavity 1022; an image sensor 104 disposed inside the cooking cavity 1022 for collecting image data of the cooking cavity 1022.

In the embodiments of the present application, the cooking device 100 is specifically an oven or a steam oven. The cooking cavity 1022 is arranged in the main body 102 of the oven, and the image sensor 104 is disposed inside the cooking cavity. When the cooking device 100 is in an operating status, the image sensor 104 can capture real-time image data of the interior of the cooking cavity 1022, specifically the image data of the foods being cooked.

In the description of the present application, the term "multiple" refers to two or more, unless otherwise clearly specified. The orientation or position relationships indicated by terms such as "upper" and "lower" are based on the orientation or position relationships shown in the accompanying drawings, and are only for the convenience of describing the present application and simplifying the description, and do not indicate or imply that the indicated device or element must have a specific orientation and be constructed and operated in a specific orientation. Therefore, they shall not be construed as limitations on the present application. Terms such as "connection", "installation" and "fixation" shall be understood in a broad sense. For example, "connection" may be a fixed connection, a detachable connection, or an integral connection; it may be a direct connection or an indirect connection through an intermediate medium. For those of ordinary skill in the art, the specific meanings of the above terms in the present application can be understood according to specific circumstances.

In the description of the present application, the description of phrases such as "one embodiment", "some embodiments" and "specific embodiment" means that the specific features, structures, materials or characteristics described in combination with the embodiments or examples are comprised in at least one embodiment or example of the present application. In the present application, the illustrative expression of the above phrases may not necessarily indicate the same embodiment or example. In addition, the specific features, structures, materials or characteristics as described may be combined with each other in an appropriate method in one or more of any embodiments or examples.

The above descriptions are merely some embodiments of the present application and are not intended to limit the present application. For those skilled in the art, various modifications and variations may be made to the present application. Any modifications, equivalent substitutions, improvements, etc. shall be comprised in the protection scope of the present application.

## Claims

1. A control method applied to a cooking device, wherein, the cooking device comprises a cooking cavity, an image sensor is provided in the cooking cavity, and the control method comprises:
collecting image data in the cooking cavity by the image sensor;
sending the image data to a target server; wherein, the target server performs image processing on the image data to obtain a processed target image, and data interaction is carried out between the target server and a target terminal, to allow the target terminal to acquire and display the target image.

2. The control method according to claim 1, wherein, the image data comprises video stream data, and the target image comprises the video stream data and a first video corresponding to the video stream data.

3. The control method according to claim 1, wherein, the image data comprises picture data, and the method further comprises:
receiving an adjustment instruction determined by the target server based on the image data; and
adjusting cooking parameters of the cooking device based on the adjustment instruction.

4. The control method according to any one of claims 1 to 3, further comprising:
controlling the image sensor to stop collecting the image data when a stop collection input is received or a cooking completion signal of the cooking device is detected.

5. A control method applied to a target server, wherein, data interaction is carried out between the target server and a target terminal, and the control method comprises:
receiving image data sent by a cooking device;
performing image processing on the image data to obtain a processed target image; and
sending the target image to the target terminal when a request for viewing the target image from the target terminal is received, to allow the target terminal to display the target image.

6. The control method according to claim 5, wherein, the image data comprises video stream data, and the target image comprises a first video corresponding to the video stream data.

7. The control method according to claim 5, wherein, after performing the image processing on the image data to obtain the processed target image, the control method further comprises:
generating a corresponding adjustment instruction according to the target image;
sending the adjustment instruction to the cooking device, to allow the cooking device to adjust cooking parameters based on the adjustment instruction.

8. The control method according to claim 5, wherein, the image data comprises multiple picture data, and the target image comprises a second video;
performing the image processing on the image data to obtain the processed target image comprises:
determining a first picture as a target frame when the first picture among the multiple picture data does not comprise a preset target;
performing algorithmic processing on a second picture when the second picture among the multiple picture data comprises the preset target, and determining a processed second picture as the target frame, wherein the processed second picture does not comprise the preset target;
sorting multiple target frames according to a receiving order of the multiple picture data corresponding to the multiple target frames to obtain a frame sequence; and
generating the second video based on the frame sequence.

9. The control method according to claim 5, wherein, performing the image processing on the image data to obtain the processed target image comprises:
acquiring preset color gamut calibration information; and
performing color gamut calibration on the image data through the color gamut calibration information to obtain a calibrated target image.

10. The control method according to any one of claims 5 to 9, wherein, the cooking device comprises a door body, after receiving the image data sent by the cooking device, the control method further comprises:
performing object recognition on the image data; and
deleting a target image frame if the target image frame in the image data is recognized as comprising the door body and the door body is in an open status.

11. A control apparatus applied to a cooking device, wherein, the cooking device comprises a cooking cavity, an image sensor is arranged in the cooking cavity, and the control apparatus comprises:
a collecting module configured to collect image data of the cooking cavity through the image sensor;
a first sending module configured to send the image data to a target server, wherein, the target server performs image processing on the image data to obtain a processed target image, and data interaction is carried out between the target server and a target terminal, to allow the target terminal to acquire and display the target image.

12. A control apparatus applied to a target server, wherein, data interaction is carried out between the target server and a target terminal, and the control apparatus comprises:
a receiving module configured to receive image data sent by a cooking device;
a processing module configured to perform image processing on the image data to obtain a processed target image; and
a second sending module configured to send the target image to the target terminal upon receiving a request for viewing the target image from the target terminal, to allow the target terminal to display the target image.

13. A control apparatus, comprising:
a memory configured to store a program or an instruction; and
a processor configured to implement steps of a control method according to any one of claims 1 to 10 when executing the program or instruction.

14. A computer-readable storage medium, on which a program or an instruction is stored, wherein, when the program or instruction is executed by a processor, steps of a control method according to any one of claims 1 to 10 are implemented.

15. A cooking device, comprising:
a control apparatus according to any one of claims 11 to 13.

16. A cooking device, comprising:
a computer-readable storage medium according to claim 14.

17. A cooking device, comprising:
a control apparatus according to any one of claims 11 to 13; and
a computer-readable storage medium according to claim 14.

18. The cooking device according to any one of claims 15 to 17, further comprising:
a main body that comprises a cooking cavity; and
an image sensor disposed inside the cooking cavity for collecting image data of the cooking cavity.
